# EUROPÄISCHE PATENTANMELDUNG

(11) **EP 1 767 330 A2**
(43) Veröffentlichungstag der Anmeldung: **28.03.2007**
(21) Anmeldenummer: 06121259.3
(22) Anmeldetag: 26.09.2006
(51) Int. Cl.: B29C 45/14, D04B 1/10, D04B 1/14

(54) **Formteil mit einem Kunststoffträger**

(30) Priorität: 27.09.2005 DE 102005046094
(71) Anmelder: Intier Automotive Eybl GmbH (Ebergassing) & Co. OHG, 2435 Ebergassing (AT)
(72) Erfinder: Sommer, Daniela, 1120 Wien (AT); Eiweck, Konrad, 7000 Eisenstadt (AT)
(74) Vertreter: Vinazzer, Edith

(57) **Zusammenfassung**

Um die Herstellung eines textilkaschierten Formteils (1) mit einem Träger (3) aus einem Kunststoffmaterial und einer äußeren textilen Dekorfläche (2) in einem Hinterspritzverfahren zu vereinfachen und insbesondere hierbei Zwischenlagen aus Fliesmaterial entbehrlich zu machen, wird vorgeschlagen, für das Dekor einen Zuschnitt (4) aus einer doppelflächigen Maschenware und insbesondere aus einem doppelflächigen Gestricke vorzusehen, wobei an der Rückseite des Zuschnitts (4) liegende Fäden oder Filamente wenigstens stellenweise in das Kunststoffmaterial des Trägers (3) eingebettet sind, um eine Verbindung zwischen dem Träger (3) und dem Zuschnitt (4) zu bewirken. Weiterhin wird ein entsprechendes Hinterspritzverfahren unter Verwendung eines Zuschnitts einer doppelflächigen Maschenware und die Verwendung einer doppelflächigen Maschenware zur Herstellung eines Formteils beschrieben.

## Beschreibung

Die vorliegende Erfindung betrifft ein Formteil mit einem Kunststoffträger und einem textilen Oberflächendekor und ein Verfahren zur Herstellung eines solchen Formteils. Insbesondere betrifft die vorliegende Erfindung ein Verkleidungsteil für den Innenraum eines Kraftfahrzeugs.

Ein bekanntes Formteil aus Kunststoff mit einem textilen Oberflächendekor offenbart die EP 1 543 934 A1. Dieses als Verkleidung für ein Kraftfahrzeug vorgesehene Formteil besteht aus einem Kunststoffträger mit einer darauf haftenden Dekorseite und ist in einem Hinterspritzverfahren herstellbar. Die Dekorseite besteht aus einem engmaschigen, dehnbaren textilen Material mit einem Flächengewicht zwischen 40 und 200 g/m². Eine strukturierte Oberfläche des Werkzeugs bewirkt eine Oberflächenstruktur auf dem Kunststoffträger des Formteils, wobei das textile Material unter Dehnung der im Kunststoffträger eingeprägten Oberflächenstruktur folgt, ohne selbst strukturiert zu werden.

Mit diesem Formteil und dem zu dessen Herstellung vorgeschlagen Verfahren verbleiben allerdings einige Probleme. Unter anderem ist eine zusätzliche Ausgestaltung des textilen Materials zur Erzeugung eines Musters auf der Oberfläche des Formteils nur unter eingeschränkten Bedingungen möglich. Aufgrund der notwendigen Dehnbarkeit des textilen Materials wird dieses durch die hohen Drücke und Strömungskräfte bei einem typischen Hinterspritzverfahren leicht gegenüber seiner optimalen Lage im Werkzeug verschoben und dadurch verspannt. Falls hierbei in dem textilen Material ein Design angelegt ist, wird dieses aufgrund der Verspannung am fertigen Produkt erkennbar verzerrt erscheinen. Dies resultiert in einem ästhetischen Mangel des Formteils. Ein nachträgliches Aufdrucken des gewünschten Musters auf die textile Oberfläche des fertigen Formteils kommt hingegen aus Kostengründen in den meisten Fällen nicht in Betracht.

Die vorliegende Erfindung stellt sich daher die Aufgabe, einen Aufbau für ein Formteil, der die Verarbeitung von bedruckten, gemusterten oder technischen Textilien in einem typischen Hinterspritz-, Hinterschäum- oder Hinterpressverfahren zu einem ästhetisch befriedigenden Oberflächendekor erlaubt.

Diese Aufgabe löst die vorliegende Erfindung unter einem ersten Aspekt durch ein Formteil mit den in Anspruch 1 angegebenen Merkmalen. Unter einem weiteren Aspekt löst die vorliegende Erfindung diese Aufgabe durch ein Verfahren zur Herstellung eines Formteils mit den in Anspruch 13 angegebenen Merkmalen.

Die Erfindung betrifft ferner die Verwendung einer doppelflächigen Maschenware in einem Verfahren zur Herstellung eines Formteils gemäß einem oder mehrerer der Ansprüche 1 bis 13 mit einem Träger aus einem Kunststoffmaterial und einer äußeren textilen Dekorfläche, wobei das Verfahren ein Hinterpress-, Hinterschäum,- oder Hinterspritzverfahren ist.

Weitere vorteilhafte Ausgestaltungen und Weiterbildungen der vorliegenden Erfindung unter beiden Aspekten sind in den jeweiligen abhängigen Ansprüchen angegeben.

Erfindungsgemäß wird vorgeschlagen, eine doppelflächige Maschenware in einem Hinterspritz-, Hinterschäum- oder Hinterpressverfahren zu einem Formteil mit einer sichtseitigen textilen Dekorfläche zu verarbeiten.

Durch diese erfindungsgemäße Ausgestaltung des Formteils in Bezug auf die verwendete dekorative Maschenware kann dessen Herstellbarkeit in einem Hinterspritz-, Hinterschäum-, oder Hinterpressverfahren unabhängig von den optischen Anforderungen an das Dekor eingestellt werden. Insbesondere erschließt der vorgeschlagene Aufbau eines Formteils auch Gestricke einer Verarbeitung in einem Hinterspritz-, Hinterschäum- oder Hinterpressverfahren, die aufgrund ihrer Maschenstruktur als einseitige Rechts-Rechts-Gestricke nicht oder nur unter Schwierigkeiten verarbeitbar sind.

Ferner schafft die von der erfindungsgemäß in der doppelflächigen Maschenware vorgesehenen Rückseite bewirkte Verringerung der Dehnbarkeit die Möglichkeit, in der Dekorseite Maschenweiten, Garnarten und/oder Bindungen zu wählen, die aufgrund ihrer Dehnbarkeit aus den eingangs beschriebenen Gründen nicht zur Verarbeitung in einem Hinterspritzverfahren geeignet wären.

Eine bevorzugte Ausführungsform der vorliegenden Erfindung und eine bevorzugte Durchführungsform des erfindungsgemäßen Verfahrens werden nachfolgend mit Bezug auf die beigefügten Zeichnungen erläutert. Darin zeigen:
- Fig. 1: eine Aufsicht auf ein Formteil mit einem Dekor aus einem doppelflächigen Gestricke gemäß der vorliegenden Erfindung;
- Fig. 2: eine Schnittansicht durch das Formteil gemäß Fig. 1;
- Fig. 3: eine vergrößerte Ansicht des Gestrickes gemäß Fig. 1;
- Fig. 4: eine schematische Darstellung zur Erläuterung der Herstellung verschiedener Bindungsarten in der Rückseite des Gestrickes gemäß Fig. 3;
- Fig. 5: eine Schnittansicht von einem Formwerkzeug zur Herstellung des Formteils gemäß Fig. 1 in einem Hinterspritzverfahren.

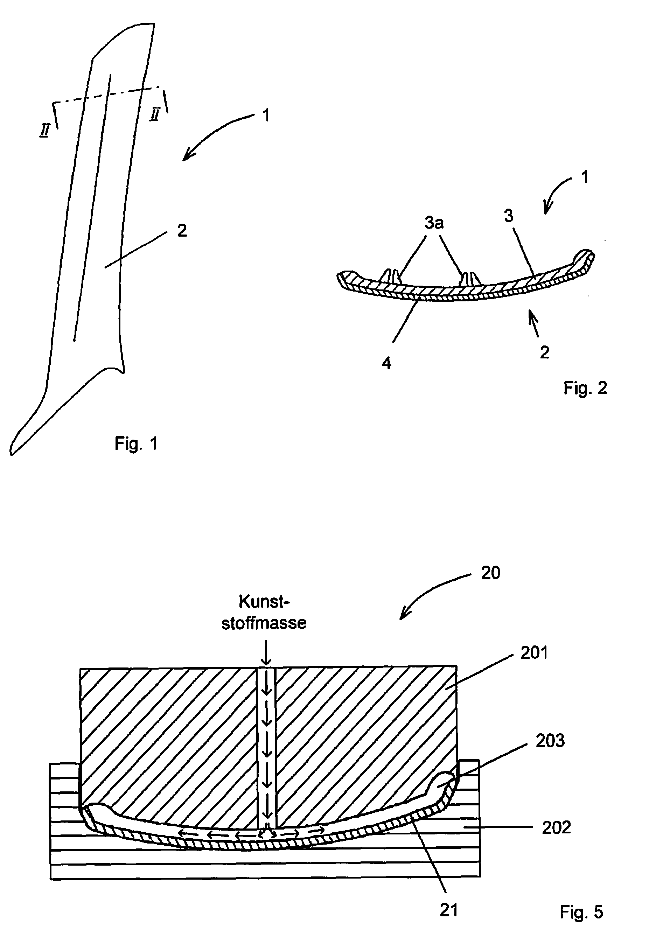

Die Fig. 1 und 2 zeigen schematisch den Aufbau eines Formteils 1 mit einer textilen Dekorfläche 2, wie es beispielsweise zur Verkleidung der A, B oder C-Säulen an einem Kraftfahrzeug zum Einsatz kommt. Auf einem starren Träger 3 aus einem vorzugsweise thermoplastischen Kunststoffmaterial ist hierzu ein doppelflächiges Gestricke 4 dekorseitig fest angeordnet. Der starre Träger 3 besteht vorteilhaft aus Acrylonitril-Butadien-Styrol ABS, Blends von Acrylonitrilbutadienstyrol/Polycarbonat (ABS/PC), Acryl-Styrol-Acrylnitril/Polycarbonat (ASA/PC),Polyamid (PA), Polycarbonat/Polybutylenterphthalat (PC/PBT) und Polycarbonat/Polyethylenterephthalat (PC/PET), Polyethylen (PE), Polypropylen (PP) oder Mischungen eines dieser Materialien mit einem geeigneten bekannten Füll- und/oder Verstärkungszuschlag, wie beispielsweise Talkum oder Glasfaser. Um das Formteil 1 einfach an einer Fahrzeugkarosserie anbringen zu können, sind daran vorzugsweise rückseitig integral mit dem Träger 3 ausgebildete Befestigungsclipse oder Spreizdübel 3a in Retainern vorgesehen.

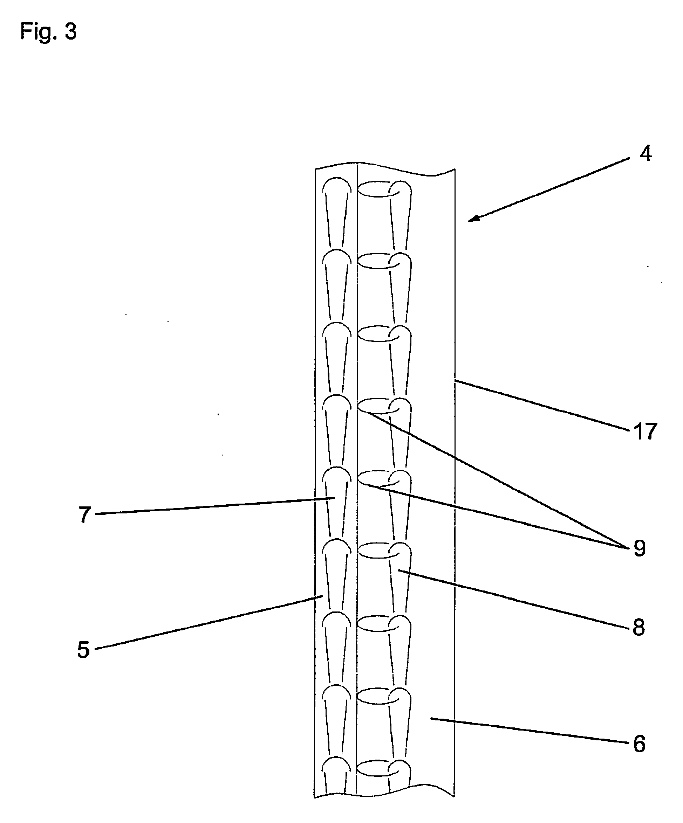

Gemäß Fig. 3 weist das doppelflächige Gestricke 4 zwei stellenweise miteinander verbundene Seiten auf. Die in Bezug auf das fertige Produkt innere Seite wird nachfolgend als Rückseite 5 bezeichnet. Die äußere Seite wird ihrer Funktion im fertigen Produkt folgend nachstehend als Dekorseite 6 in Bezug genommen. Jede der beiden Seiten 5, 6 stellt für sich genommen in der beschriebenen bevorzugten Ausführung ein einfaches Rechts-Links-Gestricke dar. Die freie, sichtseitige Oberfläche der Dekorseite 6 ist dazu vorgesehen, die Dekorfläche 2 an dem Formteil 1 zu bilden.

Die in Fig. 2 veranschaulichte Verbindung zwischen dem starren Träger 3 und der Rückseite ergibt 5 sich durch eine geringfügige Einbettung von Abschnitten des Garns oder von Filamenten des Garns der Rückseite 5 in die Kunststoffmasse des starren Trägers 3. Diese Einbettung ergibt sich beispielsweise bei der Herstellung des Formteils in einem Hinterspritz-, Hinterschäum-, oder Hinterpressverfahren. Ein solches Herstellverfahren wird in einem nachstehenden Abschnitt noch gesondert ausführlich beschrieben.

Wiederum gemäß Fig. 3 ist die Dekorseite 6 mit der Rückseite 5 durch verhältnismäßig wenige Maschen oder Henkel verknüpft. Vorzugsweise sind beide Seiten 5, 6 des Gestrickes 4 aus einem Polyestergarn gestrickt. Alternativ können allerdings auch Polyamidgarne, Baumwolle, Naturfasern, Viskose, oder PP-Garne Verwendung finden.

Wiederum vorzugsweise werden für die Rückseite 5 Fadenstärken von 40 bis 170 verwendet. Zudem ist es sinnvoll, für die Rückseite 5 nicht-texturierte, also glatte Garne einzusetzen. Insbesondere kann das Garn für die Rückseite 5 unter dem Gesichtspunkt einer guten Verbindung zwischen dem Kunststoffmaterial des Trägers 3 und den Maschen der Rückseite 5 ausgewählt werden.

Hingegen wird man vor dem Hintergrund der üblichen ästhetischen Anforderungen an die sichtseitige Oberfläche des Formteils 1 für die Dekorseite des Gestrickes 4 ein texturiertes, d.h. gekräuseltes Garn verwenden. Diese Garnart ist beim Verstricken in weiten Grenzen in der Bindung und Maschenbildung einstellbar. Außerdem ergeben texturierte Garne die vielfach gewünschte matt erscheinende Oberfläche und die 3-Dimensionalität des Dekors der Dekorfläche. Für die Tiefenwirkung des Dekors kann zusätzlich mit aufstehenden Maschen gearbeitet werden.

Beispielhaft kann ein erfindungsgemäßes Gestricke aus einem 100% PES-Filament texturiertem Garn hergestellt sein, das als Garnmaterial zu 55% dtex 167 f 35 x 1 matt für die Dekorseite und zu 35 % dtex 110 f 36 x 1 glänzend profiliert für die Rückseite verwendet wird. Ferner wird als Ergänzungsgarn für die Dekorseite 10% dtex 50 f 24 x 1 verwendet.

Falls als Material für die Garne wie eingangs beschrieben ein thermoplastischer Kunststoff gewählt wird, ist beim Hinterspritzen mit einem thermoplastischen Kunststoffmaterial darauf zu achten, dass dessen typische Verarbeitungstemperatur die Schmelztemperatur des Garns nicht erreicht.

Die Herstellung des doppelflächigen Gestrickes erfolgt in an sich bekannter Weise auf einer Flach- oder Rundstrickmaschine mit zwei Reihen einander gegenüberliegender Nadeln. Da auch die sog. Interlock-Gestricke mit derartigen Strickmaschinen herstellbar sind, werden diese häufig auch als Interlock-Strickmaschinen bezeichnet. Die Anforderungen an die Möglichkeiten der Nadelsteuerung richten sich dabei natürlich vor allem nach dem gewünschten Dekor. Für das nachfolgend beschriebene doppelflächige Gestricke reicht es aus, wenn in jeder Nadelreihe die Nadeln mit ungerader Nummer unabhängig von den Nadeln mit gerader Nummer ausgetrieben werden können. Vorliegend wird von den Bezeichnungen an einer Rundstrickmaschine ausgegangen. Dementsprechend werden die oberen Nadeln als Nadeln der Rippseite oder Tellernadeln und die unteren Nadeln als Nadeln der Zylinderseite oder Zylindernadeln bezeichnet.

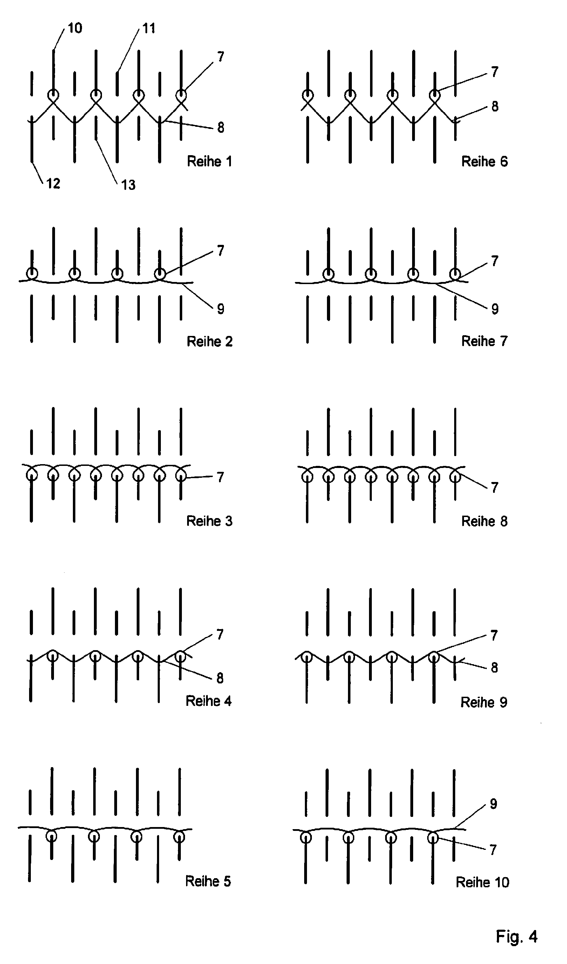

Die Einzelheiten des Bindungsaufbaus in einem exemplarischen doppelflächigen Gestricke werden nachfolgend mit Bezug auf die Fig. 4 ausführlich beschrieben.

Die Maschenreihen werden hierbei jeweils von oben nach unten und von links nach rechts nacheinander gebildet, wie in den zehn Zeilen angegeben ist. Nachfolgend wiederholt sich das Muster. Erkennbar sind dabei drei unterscheidbare Arten von Maschenreihen. Eine Maschenreihe ist nach diesem Verständnis von erster Art, wenn alle Maschen 7 oder Henkel 8 in der Rückseite 5 des doppelflächigen Gestrickes liegen. Dies ist gleichbedeutend damit, dass die Maschen 7 oder Henkel 8 dieser Maschenreihe ausschließlich von den Tellernadeln 10, 11 gebildet werden. Eine Maschenreihe ist von zweiter Art, wenn alle Maschen 7 oder Henkel 8 in der Dekorseite 6 des doppelflächigen Gestrickes liegen. Dies ist gleichbedeutend damit, dass die Maschen 7 oder Henkel 8 dieser Maschenreihe ausschließlich von den Zylindernadeln 12, 13 gebildet werden.

In der ersten Maschenreihe erzeugen die langen Tellernadeln Maschen 7, während die dazu versetzten langen Zylindernadeln 12 fangen, also Henkel 8 bilden. In dieser Maschenreihe verläuft der Faden daher abwechselnd zwischen den Maschen 7 der Tellerseite und den Henkeln 8 der Zylinderseite. Alle Maschen 7 dieser Maschenreihe liegen in der Rückseite 5, während die Henkel 8 in der Dekorseite liegen. Mithin bildet diese Maschenreihe dritter Art eine Verbindung zwischen den beiden Seiten des doppelflächigen Gestrickes.

In der nachfolgenden zweiten Maschenreihe bilden die kurzen Tellernadeln 11 Maschen 7, während die langen Tellernadeln 11 und die Zylindernadeln 12, 13 nicht stricken und demnach Flottungen 9 bilden. Alle Maschen und Flottungen dieser Maschenreihe erster Art liegen in der Rückseite des Gestrickes.

In der dritten Maschenreihe bilden alle Zylindernadeln 12, 13 Maschen 7, während die Tellernadeln 10, 11 dementsprechend nicht stricken. Alle Maschen 7 dieser Maschenreihe zweiter Art liegen in der Dekorseite des Gestrickes.

In der vierten Maschenreihe erzeugen die kurzen Zylindernadeln 13 Maschen 7, während die langen Zylindernadeln 12 fangen, also Henkel 8 erzeugen. Die Tellernadeln 10, 11 stricken dementsprechend in dieser Maschenreihe nicht. Alle Maschen 7 und Henkel 8 dieser Maschenreihe zweiter Art liegen in der Dekorseite 6 des doppelflächigen Gestrickes.

In der fünften Maschenreihe erzeugen wiederum die kurzen Zylindernadeln 13 Maschen 7, während die langen Zylindernadeln 12 und die Tellernadeln 10, 11 nicht stricken. An den langen Zylindernadeln 12 entstehen Flottungen 9, die wie die Maschen 7 in der Dekorseite des doppelflächigen Gestrickes liegen.

Der Maschenaufbau in der sechsten bis zehnten Maschenreihe entspricht dem der ersten bis fünften Maschenreihe, jedoch mit vertauschten langen und kurzen Nadeln, das Maschenbild ist also jeweils um ein Stäbchen versetzt. In Bezug auf die Rückseite bewirkt dies insbesondere, dass die Henkel in der sechsten Maschenreihe um ein Stäbchen gegenüber denen der ersten Maschenreihe versetzt sind. Dies ist vorteilhaft aber nicht zwingend für die Verarbeitbarkeit des Gestrickes. Jedenfalls sind durch die Versetzung die auf der Dekorseite aufscheinenden Henkel unter ästhetischen Gesichtspunkten etwas besser verteilt. Was die Dekorseite des Gestrickes betrifft, ergibt sich nur in den Maschenreihen neun und zehn ein sichtbarer Unterschied im Vergleich zu den vorangehenden Maschenreihen vier und fünf. In den Maschenreihen drei und acht stricken lange und kurze Nadeln gleichermaßen Maschen, weshalb hier kein Unterschied entsteht. Die in diesen Reihen erzeugten gleichartigen Maschen trennen somit die um ein Stäbchen versetzen Bereiche des Dekors.

Der Bindungsaufbau in der ersten und zweiten Maschenreihe ist unter dem Aspekt der geforderten geringen Dehnung des doppelflächigen Gestrickes hin entworfen. Besondere Bedeutung kommt dabei den Flottungen 9 in der zweiten Maschenreihe zu. Außerdem wird in der ersten und zweiten Reihe wie eingangs beschrieben vorzugsweise ein Garn verwendet, das den Forderungen nach Dehnbarkeit und guter Verbindung mit dem Kunststoffmaterial am besten gerecht wird.

Die Bindungsstrukturen der dritten, vierten und fünften Reihe werden in erster Linie durch das gewünschte sichtseitige Dekor bestimmt sein. Dementsprechend wird das diesen Maschenreihen verwendete Garn vorwiegend unter den ästhetischen Anforderungen an die Dekorseite festgelegt. Zudem können in diesen drei Maschenreihen zweiter Art unterschiedlich eingefärbte Garne verwendet werden zur Ausbildung eines sichtseitigen Farbmusters.

Der dargestellte fünfreihige Bindungsaufbau bewirkt erkennbar, dass hinter drei Maschenreihen in der Dekorseite jeweils nur zwei Maschenreihen in der Rückseite zu liegen kommen. Zwischen den verbindenden Henkeln 8 sind in der Dekorseite zwei Maschenreihen, in der Rückseite hingegen nur eine. Dadurch kann die Dekorseite durch geeignet eingestellten Fadenzug auf der Rückseite etwas zusammengedrängt werden. Dies bietet die Möglichkeit, dem doppelflächigen Gestricke an der Dekorseite etwas Dreidimensionalität und Tiefenwirkung zu geben.

Der vorstehend beschriebene Aufbau des doppelflächigen Gestrickes ist für die Erläuterung der erfindungsgemäßen Lösung besonders geeignet, weil die Dehnung des Gestrickes hauptsächlich über die erste und zweite Maschenreihe und damit die Rückseite eingestellt wird. Falls jedoch in einem anderen Anwendungsfall ein anderes Dekor zu einer verringerten Querdehnung der Dekorseite beiträgt, kann möglicherweise auf die Flottungen 9 in der zweiten Maschenreihe ganz oder teilweise verzichtet werden.

Gleichfalls kann die Anzahl der Maschenreihen zwischen den Henkeln 8, mit denen die beiden Seiten des Gestrickes verbunden sind, dem jeweiligen Anwendungsfall und dabei insbesondere den sich aus dem gewählten Dekor ergebenden Eigenschaften der Dekorseite entsprechend gewählt werden.

Zur Herstellung des vorstehend beschriebenen Formteils 1 wird ein Hinterspritz-, Hinterschäum-, oder Hinterpressverfahren vorgeschlagen. Diesen genannten Verfahren ist gemeinsam, dass eine flüssige oder fließfähige jedoch härtbare Kunststoffmasse im Kontakt mit einem Zuschnitt des textilen Materials in einem Formwerkzeug fertig geformt und in der Form ausgehärtet wird.

Insbesondere wird gemäß Fig. 5 bei einem Hinterspritzverfahren zunächst ein Zuschnitt 21 des doppelflächigen Gestrickes in die Kavität 203 eines Formwerkzeugs 20 eingebracht. Das mehrteilige Formwerkzeug 20 wird hierzu durch Trennung von Stempel- und Matrizenseite 201, 202 geöffnet. In dem Formwerkzeug 20 ist der Zuschnitt 21 so ausgerichtet, dass dessen Dekorseite 6 flach auf der Formwand der Matrizenseite 202 aufliegt. In dieser Lage ist der Zuschnitt 21 vorzugsweise an seinen Rändern durch geeignete Maßnahmen gegen ein Verrutschen gesichert. Nach dem Schließen des Formwerkzeugs 20 wird gemäß Fig. 5 dessen Kavität 203 mit einem flüssigen oder fließfähigen und härtbaren Kunststoffmaterial befüllt. Vorzugsweise wird dieses flüssige Kunststoffmaterial ein durch Erhitzen verflüssigter thermoplastischer Kunststoff oder eine Mischung auf der Grundlage eines solchen Kunststoffs sein. Zweckmäßig wird das flüssige Kunststoffmaterial von der Seite des Werkzeugs, die der Rückseite 5 des Zuschnitts 21 gegenüber liegt, zugeführt. In der dargestellten Situation erfolgt die Zufuhr an einer Stelle im Bereich der Mitte der Stempelseite 201. Auf diese Art lässt sich in der Regel ein Verschieben des Zuschnitts mit unerwünschter Faltenbildung, aufgrund der durch die strömende flüssige Kunststoffmasse ausgeübten Druck und Scherkräfte, vermeiden. Nach dem Aushärten der Kunststoffmasse wird das Formwerkzeug 20 geöffnet und das Formteil 1 entnommen. Im beschriebenen Beispiel erfolgt das Aushärten mit dem Abkühlen des thermoplastischen Kunststoffs im gekühlten Werkzeug. Alternativ kann auch ein duroplastisches Kunststoffmaterial verarbeitet werden, das infolge chemischer Reaktion nach einer vorgegebenen Verweildauer im Werkzeug aushärtet.

Um bei einem derartigen Hinterspritz-, Hinterschäum- oder bei einem alternativen Hinterpressverfahren eine dauerhafte Verbindung zwischen dem Zuschnitt 21 des doppelflächigen Gestrickes 4 und dem angeformten Träger zu erzeugen, muss das flüssige Kunststoffmaterial in Zwischenräume in der Rückseite 5 eindringen und diese wenigstens teilweise ausfüllen. Um eine ästhetisch einwandfreie Dekorseite des Formteils 1 zu erzielen, darf dabei allerdings kein flüssiges Kunststoffmaterial durch das doppelflächige Gestricke 4 hindurch gedrückt werden. Auch sollte das Kunststoffmaterial nicht bis in den Bereich der Maschen der Dekorseite 6 in das doppelflächige Gestricke 4 eindringen. Andernfalls ergibt sich durch winzige Durchschüsse des Kunststoffes zwischen dem Garn auf der Dekorseite 6 ein unerwünschter Glanz auf der Dekorseite.

Die Tiefe, bis zu der der Zuschnitt 21 im Mittel von dem flüssigen Kunststoffmaterial durchdrungen wird, hängt unter anderem vom Spritz- oder Pressdruck, dem zeitlichen Viskositätsverlauf des flüssigen und aushärtenden Kunststoffmaterials, der Abkühlzeit und letztlich der Struktur der Rückseite 5 ab. Diese Struktur wiederum wird unter anderem durch die Fadenstärke und die Art des verwendeten Garns, die Bindung der Maschen und auch die Maschenweite mitbestimmt.

### Bezugszeichen:

- Formteil: 1
- Träger: 3
- Befestigungsclips: 3a
- Dekorfläche: 2
- Gestricke: 4
- Rückseite: 5
- Dekorseite: 6
- Maschen: 7
- Henkel: 8
- Flottungen: 9
- Tellernadeln, länger: 10
- Tellernadeln, kürzer: 11
- Zylindernadeln, länger: 12
- Zylindernadeln, kürzer: 13
- Formwerkzeug: 20
- Matrizenseite Formwerkzeug: 201
- Stempelseite Formwerkzeug: 202
- Kavität: 203
- Zuschnitt: 21

## Patentansprüche

1. Formteil (1) mit einem Träger (3) aus einem Kunststoffmaterial und einer äußeren textilen Dekorfläche (2), herstellbar durch Hinterspritzen, Hinterschäumen oder Hinterpressen eines Zuschnitts (4) aus einer doppelflächigen Maschenware und insbesondere aus einem doppelflächigen Gestricke, wobei an der Rückseite (5) des Zuschnitts (4) liegende Fäden oder Filamente wenigstens stellenweise in das Kunststoffmaterial des Trägers (3) eingebettet sind, um eine Verbindung zwischen dem Träger (3) und dem Zuschnitt (4) zu bewirken.

2. Formteil (1) nach Anspruch 1, **dadurch gekennzeichnet, dass** die doppelflächige Maschenware oder das doppelflächige Gestricke einen Maschenindex mit 170-240 Maschenreihen und 110-170 Maschenstäbchen aufweist.

3. Formteil (1) nach einem der vorangehenden Ansprüche, **dadurch gekennzeichnet, dass** die doppelflächige Maschenware oder das doppelflächige Gestricke eine Längsdehnung von 7-60%, insbesondere von 7-30%, und eine Querdehnung von 16-35%, insbesondere von 16-20%, aufweist.

4. Formteil (1) nach einem der vorangehenden Ansprüche, **dadurch gekennzeichnet, dass** die doppelflächige Maschenware oder das doppelflächige Gestricke Fadenstärken von dtex 40-170 aufweist.

5. Formteil (1) nach einem der vorangehenden Ansprüche, **dadurch gekennzeichnet, dass** die doppelflächige Maschenware (4) eine Kulierstrickware ist, welche vorzugsweise auf einer Interlockmaschine herstellbar ist.

6. Formteil (1) nach einem der vorangehenden Ansprüche, **dadurch gekennzeichnet, dass** die doppelflächige Maschenware wenigstens drei unterscheidbare Arten von Maschenreihen enthält.

7. Formteil (1) nach Anspruch 6, **dadurch gekennzeichnet, dass** die Maschen (7) oder Henkel (8) der Maschenreihen der ersten Art ausschließlich zur Rückseite (5) weisen, die Maschen (7) oder Henkel (8) der Maschenreihen der zweiten Art ausschließlich zur Dekorseite (6) weisen und von den Maschen (7) und/oder Henkeln (8) der Maschenreihen der dritten Art eine Anzahl zur Dekorseite (6) und eine weitere Anzahl zur Rückseite (5) weist, wobei insbesondere durch die Maschenreihen der ersten und der zweiten Art für sich genommen jeweils Maschenwaren mit unterschiedlicher Dehnbarkeit bildbar sind und wobei die Maschenware mit der geringeren Dehnbarkeit durch die Maschenreihen der ersten Art bildbar ist.

8. Formteil (1) nach Anspruch 6 oder 7, **dadurch gekennzeichnet, dass** zumindest die Maschenreihen der ersten Art Flottungen (9) enthalten und insbesondere mehr Flottungen (9) aufweisen als die Maschenreihen der zweiten Art.

9. Formteil (1) nach Anspruch 7, **dadurch gekennzeichnet, dass** die Maschenreihen der dritten Art zur Rückseite (5) weisende Maschen (7) und zur Dekorseite (6) weisende Henkel (8) umfassen.

10. Formteil (1) nach einem der Ansprüche 6 bis 9, **dadurch gekennzeichnet, dass** in der doppelflächigen Maschenware zwischen zwei Maschenreihen der dritten Art wenigstens vier Maschenreihen liegen, die ausschließlich von der ersten und/oder der zweiten Art sind, wobei vorzugsweise die doppelflächige Maschenware anteilig weniger Maschenreihen der ersten Art als Maschenreihen der zweiten Art enthält.

11. Formteil (1) nach Anspruch 10, **dadurch gekennzeichnet, dass** zwischen zwei aufeinander folgenden Maschenreihen dritter Art wenigstens eine Maschenreihe der ersten Art und wenigstens zwei Maschenreihen zweiter Art liegen.

12. Formteil (1) nach einem der Ansprüche 6 bis 11 in Rückbeziehung auf Anspruch 5, **dadurch gekennzeichnet, dass** das doppelflächige Gestricke herstellbar ist, indem die Maschenreihen der ersten Art nur an jeder zweiten Nadel gebildet werden und der Rapport versetzt auf den im ersten Rapport nicht strickenden Nadeln wiederholt wird.

13. Verfahren zur Herstellung eines Formteils (1) nach einem der Ansprüche 1 bis 12, worin in der Kavität (203) eines Formwerkzeugs (20, 201, 202) zunächst ein Zuschnitt (21) einer doppelflächigen Maschenware angeordnet und nachfolgend eine Menge einer fließfähigen, härtbaren Kunststoffmasse eingebracht wird, die sich mit den an einer Oberfläche des Zuschnitts (21) liegenden Fasern wenigstens stellenweise dauerhaft verbindet.

14. Verwendung einer doppelflächigen Maschenware (4) in einem Verfahren zur Herstellung eines Formteils gemäß einem oder mehreren der Ansprüche 1 bis 13, mit einem Träger (3) aus einem Kunststoffmaterial und einer äußeren textilen Dekorfläche (2), wobei das Verfahren ein Hinterpress-, Hinterschäum,- oder Hinterspritzverfahren ist.

15. Verwendung nach Anspruch 14, **dadurch gekennzeichnet, dass** die doppelflächige Maschenware (4) einen Maschenindex mit 170 bis 240 Maschenreihen und 110 bis 170 Maschenstäbchen aufweist.

16. Verwendung nach Anspruch 14 oder 15, **dadurch gekennzeichnet, dass** die doppelflächige Maschenware (4) eine Längsdehnung von 7-60%, insbesondere von 7-30%, und eine Querdehnung von 16-35%, insbesondere von 16-20%, aufweist.

17. Verwendung nach einem der Ansprüche 14 bis 16, **dadurch gekennzeichnet, dass** die doppelflächige Maschenware (4) Fadenstärken von dtex 40-170 aufweist.

18. Verwendung nach einem der Ansprüche 14 bis 17, **dadurch gekennzeichnet, dass** die doppelflächige Maschenware (4) eine Kulierstrickware ist, welche vorzugsweise auf einer Interlockmaschine herstellbar ist.

19. Verwendung nach einem der Ansprüche 14 bis 18, **dadurch gekennzeichnet, dass** die doppelflächige Maschenware (4) wenigstens drei unterscheidbare Arten von Maschenreihen enthält.

20. Verwendung nach Anspruch 19, **dadurch gekennzeichnet, dass** die Maschen (7) oder Henkel (8) der Maschenreihen der ersten Art ausschließlich zur Rückseite (5) weisen, die Maschen (7) oder Henkel (8) der Maschenreihen der zweiten Art ausschließlich zur Dekorseite (6) weisen und von den Maschen (7) und/oder Henkeln (8) der Maschenreihen der dritten Art eine Anzahl zur Dekorseite (6) und eine weitere Anzahl zur Rückseite (5) weist, wobei insbesondere durch die Maschenreihen der ersten und der zweiten Art für sich genommen jeweils Maschenwaren mit unterschiedlicher Dehnbarkeit bildbar sind und wobei die Maschenware mit der geringeren Dehnbarkeit durch die Maschenreihen der ersten Art bildbar ist.

21. Verwendung nach Anspruch 19 oder 20, **dadurch gekennzeichnet, dass** zumindest die Maschenreihen der ersten Art Flottungen (9) enthalten und insbesondere mehr Flottungen (9) aufweisen als die Maschenreihen der zweiten Art.

22. Verwendung nach Anspruch 21, **dadurch gekennzeichnet, dass** die Maschenreihen der dritten Art zur Rückseite (5) weisende Maschen (7) und zur Dekorseite (6) weisende Henkel (8) umfasst.

23. Verwendung nach einem der Ansprüche 19 bis 22, **dadurch gekennzeichnet, dass** in der doppelflächigen Maschenware zwischen zwei Maschenreihen der dritten Art wenigstens vier Maschenreihen der ersten oder zweiten Art liegen, wobei vorzugsweise die doppelflächige Maschenware anteilig weniger Maschenreihen der ersten Art als Maschenreihen der zweiten Art enthält.

24. Verwendung nach Anspruch 23, **dadurch gekennzeichnet, dass** zwischen zwei aufeinander folgenden Maschenreihen dritter Art wenigstens eine Maschenreihe erster Art und wenigstens zwei Maschenreihen zweiter Art liegen.

25. Verwendung nach einem der Ansprüche 19 bis 24 in Rückbeziehung auf Anspruch 18, **dadurch gekennzeichnet, dass** das doppelflächige Gestricke herstellbar ist, indem die Maschenreihen der ersten Art nur an jeder zweiten Nadel gebildet werden und der Rapport versetzt auf den im ersten Rapport nicht strickenden Nadeln wiederholt wird.
